(19) Europäisches Patentamt
European Patent Office
Office européen des brevets

(11) **EP 4 212 814 B1**

(12) **FASCICULE DE BREVET EUROPEEN**

(45) Date de publication et mention
de la délivrance du brevet:
**10.07.2024 Bulletin 2024/28**

(21) Numéro de dépôt: **23150109.9**

(22) Date de dépôt: **03.01.2023**

(51) Classification Internationale des Brevets (IPC):
**F28D 20/02** (2006.01) **F28F 13/00** (2006.01)
**F28D 20/00** (2006.01)

(52) Classification Coopérative des Brevets (CPC):
**F28D 20/021; F28D 20/023; F28F 13/003;**
F28D 2020/0082; Y02E 60/14

(54) **ENSEMBLE MODULAIRE DE STOCKAGE THERMIQUE A MATÉRIAU A CHANGEMENT DE PHASE, DONT LA FABRICATION EST SIMPLIFIÉE**

MODULARE WÄRMESPEICHERANORDNUNG MIT PHASENWECHSELMATERIAL, DESSEN HERSTELLUNG VEREINFACHTEN HERSTELLUNG

MODULAR THERMAL STORAGE ASSEMBLY WITH PHASE-CHANGE MATERIAL, THE PRODUCTION OF WHICH IS SIMPLIFIED

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.01.2022 FR 2200118**

(43) Date de publication de la demande:
**19.07.2023 Bulletin 2023/29**

(73) Titulaires:
• **Commissariat à l'énergie atomique et aux énergies alternatives 75015 Paris (FR)**
• **Grims 38280 Villette d'Anthon (FR)**

(72) Inventeurs:
• **VESIN, Sébastien 38054 GRENOBLE CEDEX 09 (FR)**
• **GRIMAUD, Cyrille 38280 VILLETTE D'ANTHON (FR)**
• **GRIMAUD, Louane 38280 VILLETTE D'ANTHON (FR)**

(74) Mandataire: **Brevalex Tour Trinity 1 B Place de la Défense 92400 Courbevoie (FR)**

(56) Documents cités:
WO-A1-2015/189450    AU-A4- 2019 100 692
CN-A- 111 765 791    FR-A1- 2 875 432
FR-A1- 2 943 410    FR-A1- 2 996 631
GB-A- 2 519 742    US-A1- 2018 313 613
US-A1- 2019 011 147

**Description**

**DOMAINE TECHNIQUE ET ÉTAT DE LA TECHNIQUE ANTÉRIEURE**

La présente invention se rapporte à un système de stockage de chaleur par matériau à changement de phase à fabrication simplifiée.

Les systèmes de stockage de chaleur par matériau à changement de phase trouvent leur application dans de nombreux domaines, par exemple dans le stockage de chaleur dans les centrales solaires et dans les réseaux de chaleur et/ou de froid, les réseaux urbains, les réseaux industriels.

Les systèmes de stockage thermique particulièrement intéressants sont les systèmes mettant en oeuvre un échangeur à tubes et à calandre comportant une calandre ou cuve remplie de matériau à changement de phase et des tubes traversant la cuve et connectés à une source de caloporteur. Le caloporteur, en circulant dans les tubes, échange de la chaleur avec le matériau à changement de phase. Lors d'une phase de charge, le fluide caloporteur arrive à une température supérieure à la température de fusion du matériau à changement de phase et cède de l'énergie à celui-ci, ce qui entraîne la fusion du matériau à changement de phase, le caloporteur sort du système à une température inférieure à sa température d'entrée. Lors d'une phase de décharge, le fluide caloporteur entre dans le système à une température inférieure à la température de cristallisation du matériau à changement de phase et récupère l'énergie précédemment stockée, ce qui entraîne la solidification du matériau à changement de phase. Le fluide caloporteur sort du système à une température supérieure à sa température d'entrée.

Or, les matériaux à changement de phase ont pour inconvénient de présenter une faible conductivité thermique, par exemple dans le cas de l'octadecanol dont la conductivité thermique moyenne est de l'ordre de 0,3 W/mK, valeur typique des matériaux faiblement conducteurs, voire thermiquement isolant.

Il faut donc optimiser La conduction thermique entre le fluide caloporteur et le matériau à changement de phase. L'une des méthodes usuellement utilisée pour cela est le stockage de type tube et calandre constitué d'une cuve intégrant un faisceau de tubes souvent munis d'ailettes pour diffuser la chaleur. Cependant, afin de conserver un coût de revient raisonnable, les tubes à ailettes utilisés sont souvent des tubes à ailettes standards, notamment dans le domaine de la pétrochimie présentant des ailettes de diamètre relativement faible, par exemple de l'ordre de 5 cm, ce qui implique d'utiliser un grand nombre de tubes à ailettes pour suffisamment diffuser la chaleur dans le matériau à changement de phase. Or ce grand nombre de tubes doit être assemblé aux plaques collectrices supérieures et inférieures de la calandre, par exemple par soudage ou dudgeonnage. Cela implique un temps de fabrication important et un coût de fabrication élevé. En outre les risques de fuite sont augmentés.

De plus, du fait de la circulation du fluide caloporteur dans un grand nombre de tubes, celui-ci a une vitesse réduite, ce qui peut dans certains cas nécessiter la mise en oeuvre de dispositifs spéciaux, appelés inserts, dans les tubes, complexifiant la fabrication des tubes et augmentant le coût du système de stockage thermique.

Le document EP2904343 décrit un système de stockage thermique comportant une calandre, des tubes et des inserts en aluminium rapportés sur la face extérieure des tubes et diffusant la chaleur au sein du matériau à changement de phase, ce qui permet de réduire le nombre de tubes. Cependant un jeu existe entre le tube et l'insert, ce qui pénalise le transfert thermique entre le tube et l'insert.

Outre les problèmes mentionnés ci-dessus en rapport à la facilité de fabrication, il est noté que le déploiement de moyens de stockage de chaleur au coeur des villes, et plus particulièrement dans les sous-stations des réseaux, pose des contraintes supplémentaires liées au manque de place et à la forte pression foncière qui s'applique souvent aux milieux urbains.

Par conséquent, il subsiste un besoin d'optimisation des solutions actuelles non seulement pour faciliter la fabrication des systèmes de stockage thermique, mais également de manière à pouvoir les décliner sous plusieurs tailles et plusieurs formes, en particulier pour faciliter leur intégration dans les sous-stations des réseaux de chaleur.

**EXPOSÉ DE L'INVENTION**

C'est par conséquent un but de la présente invention d'offrir une solution de stockage thermique à matériau à changement de phase de réalisation simplifiée, offrant des performances améliorées, et pouvant facilement s'adapter en forme et en taille à l'emplacement dédié pour son implantation.

Pour ce faire, l'invention a tout d'abord pour objet un ensemble modulaire de stockage thermique par matériau à changement de phase comportant plusieurs modules de stockage thermique fixés les uns aux autres, l'ensemble de stockage thermique comprenant une cuve, chaque module de stockage thermique par matériau à changement de phase étant délimité par une pluralité de parois extérieures, et comprenant :

- au moins un échangeur thermique comportant des première et deuxième extrémités de connexion destinées à être connectées à un réseau de fluide caloporteur, lesdites première et deuxième extrémités de connexion pénétrant et débouchant de la cuve,

- une structure destinée à contenir un matériau à changement de phase, ladite structure comprenant une matrice poreuse à cellules communicantes traversée par ledit échangeur thermique et en contact avec la surface extérieure dudit échangeur thermique, ladite matrice étant obtenue par moulage autour dudit échangeur thermique,

au moins l'une des parois extérieures du module, appelée paroi extérieure pleine, étant formée par moulage directement sur la matrice poreuse de manière à former une partie de ladite cuve de l'ensemble de stockage thermique, au moins l'une des autres parois extérieures du module, appelée paroi extérieure poreuse, étant formée par la matrice poreuse,

et parmi les modules de l'ensemble de stockage thermique, au moins deux modules adjacents sont disposés de sorte qu'une paroi extérieure poreuse de l'un des modules soit agencée face à une paroi extérieure poreuse de l'autre des modules, et de sorte qu'une paroi extérieure pleine de l'un des modules soit fixée à une paroi extérieure pleine de l'autre des modules.

De par son caractère modulaire, l'invention permet de parfaitement s'adapter en taille et en forme aux contraintes liées à son emplacement, parfois compliqué lorsqu'il s'agit d'un milieu urbain. Il suffit en effet d'adapter le nombre de modules de stockage thermique, et leur disposition. De préférence, les modules pourront être empilés verticalement, de manière à augmenter la capacité de stockage thermique sans augmenter la prise au sol. Néanmoins, en fonction des contraintes rencontrées et des besoins observés, les modules pourront également ou alternativement être juxtaposés horizontalement.

En fixant les parois extérieures pleines les unes aux autres, celles-ci contribuent à bénéficier, de manière simple et maîtrisée, d'une cuve présentant une résistance mécanique élevée. D'autre part, les fixations entre les chants des parois extérieures pleines peuvent avantageusement être réalisées depuis l'extérieur de l'ensemble, ce qui facilite grandement leur accessibilité, notamment pour les opérations de contrôle et d'inspections. Enfin, le fait de former au moins une partie de la cuve par moulage directement sur la matrice poreuse facilite grandement la réalisation des modules, et les performances de ces derniers sont assurées en partie par l'excellent contact observé entre les échangeurs et la matrice poreuse. Cette solution confère en effet une grande adhésion entre la matrice poreuse et les échangeurs, améliorant le transfert de chaleur de ces échangeurs vers la structure de module, et inversement.

L'invention présente de préférence au moins l'une des caractéristiques optionnelles suivantes, prises isolément ou en combinaison.

De préférence, lesdites première et deuxième extrémités de connexion dudit échangeur thermique traversent au moins une paroi extérieure pleine de chaque module de stockage thermique. Avec cette conception, il n'est avantageusement plus requis de rapporter au moins une plaque d'extrémité sur les extrémités de connexion, ni de les assembler de manière étanche sur ceux-ci. Le procédé de fabrication s'en trouve simplifié.

De préférence, la cuve est intégralement réalisée par des parois extérieures pleines des modules. Cette solution est particulièrement avantageuse en ce sens qu'elle permet l'obtention d'un ensemble de stockage thermique finalisé, par simple assemblage / fixation des modules qui la composent. Comme cela sera décrit ci-après, un exemple d'assemblage des modules consiste à les souder les uns aux autres, ces opérations de soudage pouvant être préparées en partie avant l'installation des modules, afin de faciliter la réalisation de l'ensemble modulaire.

Alternativement, la cuve est réalisée par des parois extérieures pleines des modules pour former un corps de cuve, fermé par un couvercle rapporté sur ces parois extérieures pleines. Cette solution est préférée en particulier lorsqu'il est recherché un ensemble de stockage thermique avec couvercle démontable, et/ou avec un réservoir pour le matériau à changement de phase. Ainsi, lorsque ce matériau se dilate lors de sa fusion, il peut sortir par la/les parois extérieures poreuses et pénétrer à l'état liquide dans et ce réservoir.

De préférence, le couvercle est rapporté par bridage mécanique sur le corps de cuve, bien que d'autres types de liaisons soient envisageables, réversibles ou non, sans sortir du cadre de l'invention.

De préférence, deux parois extérieures pleines de deux modules adjacents sont fixées l'une à l'autre par raboutage de leurs chants en regard, de préférence par soudage.

De préférence, au moins l'une des parois extérieures pleines des modules est formée directement lors du moulage de la matrice et d'un seul tenant avec la matrice. Cette particularité simplifie grandement le procédé de fabrication.

Selon une autre possibilité, au moins l'une des parois extérieures pleines des modules est formée sur la matrice après le moulage de celle-ci. Cela permet d'utiliser un matériau différent pour la réalisation de la paroi extérieure pleine, avantageusement un matériau offrant des propriétés d'isolation thermique par rapport à la mousse. Ainsi, il est de préférence fait en sorte qu'au moins l'une des parois extérieures pleines des modules est en un matériau présentant une conductivité thermique inférieure à celle de la matrice de son module associé.

De préférence, la matrice poreuse est en matériau métallique, par exemple en aluminium ou alliage d'aluminium.

De préférence, ledit échangeur thermique est un tube. Dans ce cas de figure, les extrémités de connexion sont donc des extrémités de ces tubes. Celles-ci sont configurées pour être raccordées les unes aux autres, par liaison filetée, par soudage, ou encore par toute autre liaison réputée appropriée, en particulier des liaisons mécaniques.

Dans un autre exemple, les échangeurs thermiques sont des plaques d'échangeurs, et les extrémités de connexion sont par exemple des tubes rapportés sur les bords des plaques et assurant l'alimentation et l'évacuation du fluide caloporteur. En variante, une chambre de distribution et une chambre de collecte sont prévues aux extrémités des plaques d'échangeur.

La mise en oeuvre d'une structure poreuse en matériau métallique assure une très bonne diffusion de la chaleur au sein du matériau à changement de phase. L'efficacité de la charge et de la décharge est améliorée. En outre, le nombre de tubes peut être réduit, ce qui permet de ne pas avoir à recourir à des inserts dans les tubes, et le coût de revient peut ainsi être réduit.

De manière très avantageuse, la matrice poreuse ou mousse comporte une première zone entre les tubes présentant une première porosité et en contact avec les tubes, et une deuxième zone de deuxième porosité entourant la première zone et de porosité sensiblement plus faible que la première porosité. Cette matrice assure une très bonne conduction thermique entre les tubes et la matrice en réduisant la quantité de matériau à changement de phase en contact avec les tubes, le matériau à changement de phase présentant une faible conductivité thermique. En d'autres termes, les tubes sont entourés par une couche (ou peau) de matériau métallique faiblement poreux formant une surépaisseur autour des tubes et adhérant aux tubes. En outre, la tenue de la structure métallique autour des tubes est améliorée.

De préférence, au moins l'un des modules est équipé de plusieurs échangeurs thermiques, de préférence configurés pour être connectés en parallèle à un réseau de fluide caloporteur et dans lequel les premières extrémités de connexion sont destinées à être connectées à une nourrice hydraulique, et les deuxièmes extrémités de connexion sont destinées à être connectées à une deuxième nourrice hydraulique.

De préférence, chaque module présente une forme générale parallélépipédique, et ils sont assemblés de manière à ce que l'ensemble de stockage présente également une forme générale parallélépipédique. Cette forme parallélépipédique est particulièrement bien adaptée dans le cadre d'une conception modulaire, puisqu'elle autorise des empilements verticaux et/ou horizontaux de ces modules, de manière à s'adapter au mieux aux contraintes de l'environnement dans lequel doit être implanté le système de stockage. Néanmoins, d'autres formes peuvent être envisagées pour les modules, comme des formes générales cylindriques ou encore semi-cylindriques.

Selon un premier mode de réalisation préféré de l'invention, l'ensemble de stockage thermique est formé par deux modules au sein de chacun desquels quatre de ses six parois extérieures sont des parois extérieures pleines, et les deux autres des parois extérieures poreuses, les deux modules étant assemblés l'un à l'autre de sorte que les huit parois extérieures pleines forment un corps de cuve, fermé par un couvercle rapporté sur ces parois extérieures pleines. Alternativement, il est possible d'envisager les deux mêmes modules avec cinq de leurs six parois extérieures formées par des parois extérieures pleines, de sorte qu'après leur fixation l'un à l'autre, la totalité de la cuve soit obtenue. Il en découle une simplicité ainsi qu'une rapidité de fabrication de l'ensemble de stockage thermique.

Selon un second mode de réalisation préféré de l'invention, l'ensemble de stockage thermique est formé par quatre modules au sein de chacun desquels quatre de ses six parois extérieures sont des parois extérieures pleines, et les deux autres des parois extérieures poreuses, les quatre modules étant assemblés les uns aux autres de sorte que les seize parois extérieures pleines forment l'intégralité de la cuve. Alternativement, il est possible d'envisager les quatre mêmes modules avec, pour deux d'entre eux, seulement trois de leurs six parois extérieures formées par des parois extérieures pleines. Cela permet, après la fixation des modules les uns aux autres, de ménager une ouverture afin de recevoir un couvercle pour compléter la cuve.

Pour des ensembles de plus grands volumes, il est également envisagé un ou plusieurs modules intérieurs sans aucune paroi extérieure pleine. Dans ce cas de figure, ces modules intérieurs sont entourés par plusieurs modules comprenant chacun une ou plusieurs parois extérieures pleines, par exemple une, deux ou trois.

L'invention a également pour objet, un système de stockage thermique comportant au moins un tel ensemble modulaire, et du matériau à changement de phase remplissant les cellules des matrices des modules.

Enfin, l'invention a également pour objet un procédé de fabrication d'un tel ensemble modulaire de stockage thermique, comportant la fabrication des modules, puis leurfixation les uns aux autres par fixation de leurs parois extérieures pleines entre elles.

De préférence, la fabrication de chaque module comprend :

- la fourniture d'une préforme comprenant des plaques de noyaux et au moins un échangeur thermique entre les noyaux,
- la mise en place de la préforme dans un moule,
- l'introduction d'un métal liquide dans la préforme,
- la solidification du métal,
- le retrait des noyaux.

D'autres avantages et caractéristiques de l'invention apparaîtront dans la description détaillée non limitative ci-dessous.

## BRÈVE DESCRIPTION DES DESSINS

La présente invention sera mieux comprise sur la base de la description qui va suivre et des dessins en annexe sur lesquels:

[Fig. 1] est une vue schématique en perspective, partiellement éclatée, d'un ensemble modulaire de stockage thermique pour un système de stockage thermique à matériau à changement de phase, l'ensemble se présentant sous la forme d'un premier mode de réalisation préféré de l'invention.
[Fig. 1A] est une vue schématique en coupe longitudinale de l'un des deux modules formant l'ensemble de la figure 1, prise selon le plan P de la figure 1B.
[Fig. 1B] est une vue schématique en perspective du module montré sur la figure précédente.
[Fig. 1C] est une photographie d'un exemple de matrice pouvant être mise en oeuvre dans le module de stockage thermique montré sur les figures précédentes.
[Fig. 2] est une vue en coupe similaire à celle de la figure 1A, avec le module de stockage thermique se présentant sous la forme d'une alternative.
[Fig. 3] est une vue en perspective similaire à celle de la figure 1, avec le corps de cuve se présentant selon une autre forme de réalisation.
[Fig. 4] est une vue en coupe, partiellement éclatée, d'une partie de l'ensemble modulaire montré sur la figure précédente.
[Fig. 5] est une vue schématique de côté du système de stockage, montrant le raccordement de l'ensemble modulaire à des nourrices hydrauliques.
[Fig. 6] est une vue en perspective similaire à celle de la figure 1, avec l'ensemble modulaires se présentant sous la forme d'un second mode de réalisation préféré de l'invention.
[Fig. 7A]
[Fig. 7B]
[Fig. 7C]
[Fig. 7D]
[Fig. 7E]

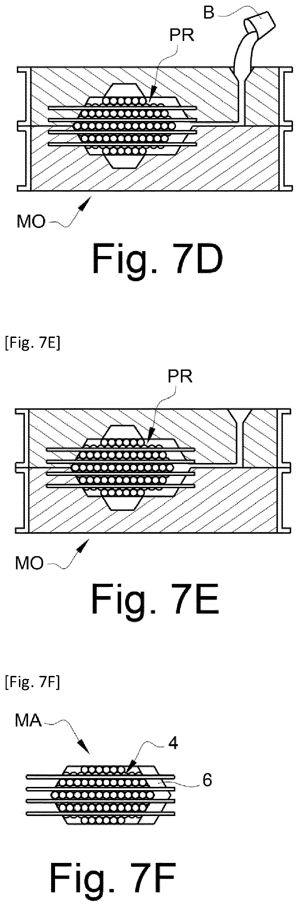

[Fig. 7F] sont des représentations schématiques de différentes étapes d'un exemple procédé de fabrication d'un module de stockage thermique.

## DESCRIPTION DÉTAILLÉE DES MODES DE RÉALISATION

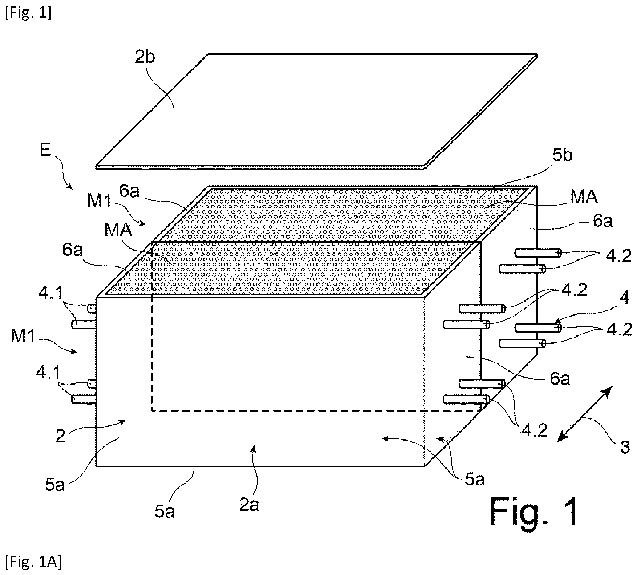

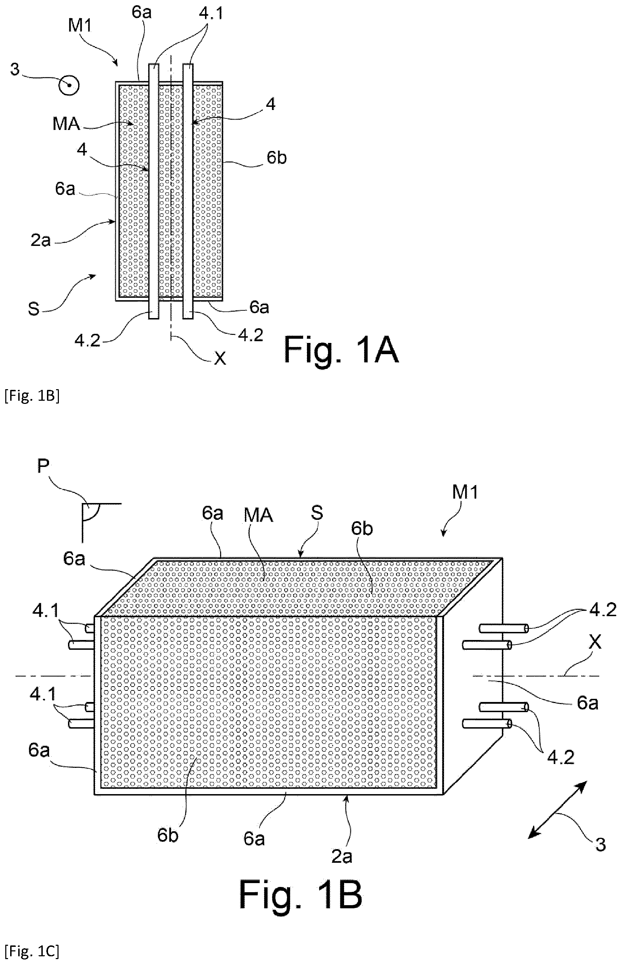

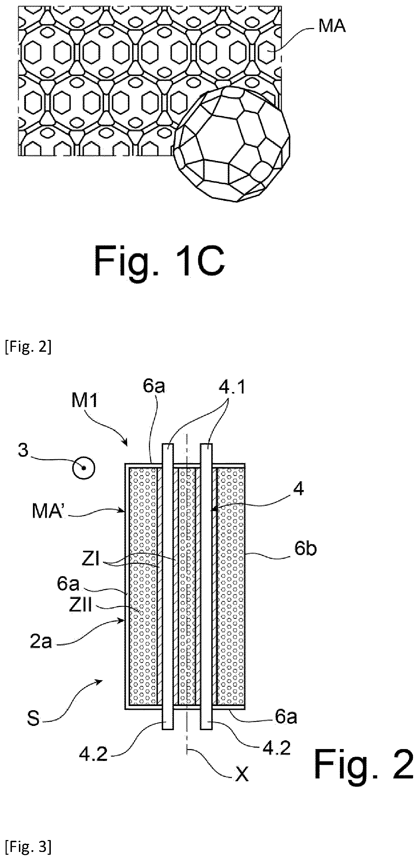

La figure 1 représente un ensemble modulaire de stockage thermique E d'un système de stockage thermique par matériau à changement de phase.

L'ensemble modulaire E se présente ici sous la forme d'un premier mode de réalisation préféré de l'invention, dans lequel il est formé à l'aide de deux modules de stockage thermiques M1. Les deux modules M1, fixés l'un à l'autre, sont chacun de forme générale parallélépipédique, de conception identique et agencés en regard l'un de l'autre de manière à être symétriques l'un par rapport à l'autre. Les deux modules M1 sont ici adjacents selon une direction d'empilement 3 correspondant par exemple à une direction verticale ou horizontale, de sorte que l'ensemble modulaire obtenu E présente également une forme générale parallélépipédique.

L'ensemble E présente une calandre ou cuve 2, formant l'enveloppe extérieure de l'ensemble. Plus précisément, la cuve 2 est ici formée par un corps de cuve 2a défini par les parois extérieures pleines des modules, ainsi que par un couvercle 2b rapporté sur ces mêmes parois extérieures pleines des modules, comme cela sera décrit ci-après.

Généralement, la surface extérieure de la cuve du module est recouverte d'un matériau isolant thermique formant un calorifuge (non représenté), pour réduire les pertes thermiques de l'ensemble E vers l'extérieur. Le matériau et l'épaisseur de ce revêtement d'isolation thermique sont conventionnels, et choisis en fonction des besoins rencontrés.

En référence à présent aux figures 1A à 1C, il va être décrit l'un des deux modules de stockage thermique M1 à matériau à changement de phase. Le module M1 comporte une partie du corps de cuve 2a formé à l'aide de plusieurs de ses parois extérieures, au nombre total de six. Le module M1 s'étend selon un axe longitudinal X, correspondant à l'axe de la grande dimension de sa forme parallélépipédique M1.

Des tubes 4 sont disposés dans la partie du corps de cuve 2a définie par le module M1. Dans cet exemple, les tubes 4 s'étendent le long de la direction longitudinale X, ces tubes 4 traversant ladite partie du corps de cuve 2a contenant un matériau à changement de phase MCP.

Une première extrémité 4.1 des tubes 4 est destinée à être reliée à une source de fluide caloporteur chaud ou à un système d'utilisation d'un fluide caloporteur chaud, et une deuxième extrémité 4.2 des tubes est destinée à être reliée à un réservoir de caloporteur froid ou à un système d'utilisation d'un fluide caloporteur froid.

Dans la présente demande, on entend par « fluide caloporteur chaud » un fluide caloporteur à une température supérieure à la température de fusion du matériau à changement de phase, il est donc apte à céder de l'énergie au matériau à changement de phase, et par « fluide caloporteur froid » un fluide caloporteur à une température inférieure à la température de cristallisation du matériau à changement de phase, il est donc apte à extraire de l'énergie du matériau à changement de phase.

A des fins de simplicité, le matériau à changement de phase sera désigné par matériau MCP dans la suite de la description.

Par exemple le matériau MCP est choisi parmi les paraffines, les alcools gras, les acides gras, les alcools de sucre, les hydrates de sel, etc.

Le fluide caloporteur peut être liquide lorsqu'il est chaud et lorsqu'il est froid, le fluide ne change alors pas de phase lors des phases de charge et décharge du module, ou être sous forme vapeur lorsqu'il est chaud et liquide lorsqu'il est froid, un changement de phase du caloporteur ayant alors lieu lors des phases de charge et de décharge.

Une structure S du module M1 comporte une matrice MA en mousse alvéolaire, poreuse, pouvant être métallique. Ainsi, cette matrice MA est préférentiellement une matrice alvéolaire métallique à pores ouverts, encore plus préférentiellement sous forme de mousse.

Cette mousse est composée d'une pluralité d'alvéoles ouvertes, communicantes entre elles et débouchant sur l'extérieur de la matrice. La mousse alvéolaire est une structure stochastique ou une structure régulière, ordonnée et homogène ou non. Les cellules sont par exemple des zonoèdres, par exemple des cellules de Kelvin, qui ont une forme d'octaèdre tronqué, et son reliées entre elles par des brins.

Sur la figure 1C on peut voir une représentation d'un exemple de matrice. Le diamètre moyen des cellules peut être compris entre 10 mm et 100 mm, et les brins ont une épaisseur de quelques mm.

La matrice MA peut aussi comporter des alvéoles présentant des variantes géométriques les unes par rapport aux autres. Les alvéoles peuvent présenter d'autres formes, cylindriques, parallélépipédiques, à base polyédriques, notamment à base octogonale, ou carrée ou autre.

De préférence, les pores ont un diamètre moyen compris entre 10 mm et 100 mm. De préférence également, l'épaisseur des brins est de l'ordre de quelques millimètres.

Dans un mode de réalisation, le matériau de la matrice est métallique, par exemple en aluminium, en alliage d'aluminium, en alliage à base de nickel ou en fonte d'acier, ou encore à base de cuivre. Les matériaux métalliques présentent l'avantage d'offrir une conductivité thermique élevée.

Dans un autre mode de réalisation, la matrice est réalisée en un matériau non métallique, par exemple en verre borosilicate, en verre sodocalcique, en composite ou en tout autre matériau compatible avec le procédé de fabrication décrit et mis en oeuvre pour obtenir la matrice MA. Le matériau est choisi de sorte à être compatible avec le matériau MCP et de sorte à être compatible avec les températures de fonctionnement du système de stockage. La matrice MA est réalisée par surmoulage monobloc et monocouche autour des tubes 4, formant chacun un échangeur thermique. De cette manière, la matrice MA est en contact avec la surface extérieure des tubes 4. Cette solution confère une grande adhésion entre la matrice poreuse MA et les tubes 4, améliorant le transfert de chaleur des tubes vers la structure, et de la structure vers les tubes. La matrice MA est réalisée par un procédé de moulage mettant en oeuvre une préforme réalisée à partir de noyaux. Un exemple de procédé de fabrication sera décrit ci-dessous.

Les tubes peuvent être en acier carbone, en acier inoxydable ou tout autre métal présentant une température de fusion suffisante pour tenir à la température de fusion du matériau de la matrice lors du procédé de moulage.

La mise en oeuvre d'une matrice poreuse pour diffuser la chaleur dans le matériau MCP ou pour l'en extraire permet de réduire, voire supprimer les zones de matériau MCP qui seraient difficilement accessibles thermiquement et ne participeraient donc pas au stockage thermique.

Une alternative est représentée sur la figure 2. Le module de stockage thermique M1 est tel que le moulage de la matrice MA' autour de tubes 4 est réalisé afin que des zones ZI de la matrice entourant les tubes et à proximité de ceux-ci présentent une porosité sensiblement plus faible que celles des zones ZII plus éloignées des tubes. Les zone ZI forment chacune une gaine de matériau métallique faiblement poreux, entourant les tubes 4 et en contact avec ceuxci. Les zones ZII de la matrice éloignées des tubes ont par exemple une porosité comprise entre 75% et 95%, et la porosité des zones ZI est comprise par exemple entre 0% et quelques %.

La porosité d'une structure alvéolaire peut être calculée de la manière suivante : la masse m1 de la structure alvéolaire est mesurée en kg. La structure alvéolaire est placée dans un récipient et entièrement immergée dans de l'eau qui est versée jusqu'à une graduation donnée. La masse m2 de l'ensemble constitué par la structure alvéolaire et l'eau est mesurée en kg. Le récipient est vidé puis rempli uniquement d'eau jusqu'à ladite graduation. La masse m3 d'eau est mesurée en kg.

Le volume de la structure alvéolaire Vsol est déterminé en litre (l).

Le taux de vide $\varepsilon$ est calculé selon l'équation suivante, où $\rho$ est la masse volumique de l'eau en kg/l :

[Math 1]

$$\varepsilon = 1 - \frac{m_3 - (m_2 - m_1)}{\rho\, V_{sol}}$$

Les zones ZI de faible porosité permettent de réduire, voire supprimer, la présence de matériau MCP directement en contact avec les tubes, le matériau MCP présentant généralement une faible conductivité thermique. De plus ces zones ZI, ou peaux, permettent d'améliorer les transferts thermiques dans les différentes directions de la matrice, ces zones entourant de manière homogène les tubes. La réalisation de ces zones ZI formant une surépaisseur extérieurement sur les tubes est obtenue en réservant dans la préforme des volumes libres autour des tubes, ces volumes libres favorisant par ailleurs l'écoulement et la répartition du matériau en fusion à l'intérieur du moule, lors de la coulée du métal liquide.

La surépaisseur a par exemple une épaisseur de quelques millimètres. A titre d'exemple non-limitatif, elle a une épaisseur entre 5 mm et 10 mm, pour des tubes de diamètre de 17,2 mm et d'épaisseur de 2 mm.

De préférence, on réalise les tubes 4 en un matériau différent de celui de la matrice, le matériau des tubes étant apte à tenir la pression du fluide caloporteur, et adapté au fluide caloporteur.

Quelle que soit la réalisation envisagée pour la matrice poreuse MA, MA', la structure S du module comporte également plusieurs parois extérieures, ici six parois correspondant respectivement aux six faces du parallélépipède.

Dans ce premier mode de réalisation préféré de l'invention, quatre des six parois extérieures sont réalisées de manière monobloc avec la matrice poreuse et simultanément à celle-ci, de manière à former quatre parois extérieures pleines 6a.

La préforme et le moule sont conçus pour la formation des parois pleines 6a lors du moulage de la matrice. Elles sont ainsi formées du même matériau que la matrice MA, MA', et réalisées de manière pleine de sorte à être étanche au matériau MCP. Le fait de réaliser la paroi dans le même matériau que celui de la matrice présente comme avantage de permettre une mise en oeuvre simplifiée. En outre, les difficultés liées à des différences de valeurs de coefficient de dilatation sont limitées.

Selon une alternative, les quatre parois extérieures pleines 6a sont formées dans un matériau différent de celui de la matrice MA, MA'. Cette réalisation permet avantageusement d'avoir des parois pleines 6a réalisées dans un matériau moins conducteur thermiquement que la matrice MA, MA' de sorte à limiter les pertes thermiques du module de stockage vers l'extérieur. Les parois extérieures 6 sont réalisées dans un autre matériau compatible avec la réalisation de la matrice, et qui lui permet de conserver ses qualités d'étanchéité au matériau MCP, de tenue mécanique à la pression exercée par l'intérieur du module de stockage, de compatibilité avec le matériau MCP dans la gamme des températures d'utilisation du module de stockage.

Par exemple, dans le cas où le matériau de chaque paroi 6a possède une température de fusion inférieure à celle du matériau de la matrice MA, le mode opératoire de réalisation du module peut consister à couler dans un premier temps le matériau en fusion composant la matrice MA puis de laisser refroidir la matrice MA jusqu'à ce que sa température soit inférieure à la température de fusion du matériau de la paroi 6a, afin de couler dans un second temps le matériau en fusion composant de la paroi 6a. Les préformes sont ainsi conçues pour délimiter les deux zones, i.e. la matrice MA, MA' et la paroi 6, et permettre la coulée des deux matériaux différents en deux étapes dans chacune des zones distinctes. Par exemple, des préformes spécifiques à la réalisation de chaque paroi pleine 6a pourraient être rapportées à la suite de la réalisation de la matrice MA, MA'. Par exemple, chaque paroi 6a pourrait être réalisée dans un matériau présentant avantageusement une plus faible conductivité thermique que la matrice MA, MA', voire une meilleure résistance mécanique ou une meilleure aptitude à la déformation thermomécanique ou une meilleure étanchéité au matériau MCP.

L'un des avantages de réaliser au moins une paroi pleine 6a en un matériau différent de celui de la matrice est d'utiliser un matériau moins conducteur thermique pour cette paroi. Par exemple, la matrice MA, MA' peut être réalisée en alliages d'aluminium de fonderie qui présentent pour la plupart des conductivités thermiques à 20°C de l'ordre de 120 W.m$^{-1}$.K$^{-1}$ à 160 W.m$^{-1}$.K$^{-1}$.

A titre d'exemple, la conductivité thermique à 20°C de l'alliage d'aluminium de fonderie AS7G06 est égale à 160 W.m$^{-1}$.K$^{-1}$ et celle de l'alliage d'aluminium A-S5U3G est égale à 120 W.m$^{-1}$.K$^{-1}$.

La paroi peut être réalisée en un matériau plus isolant thermique que l'aluminium et ses alliages, par exemple en fonte d'acier ayant une conductivité thermique à 20°C égale à 55 W.m$^{-1}$.K$^{-1}$. D'autres matériaux restent envisageables, sans sortir du cadre de l'invention. La conductivité thermique des solides peut être mesurée directement ou indirectement, i.e. en mesurant leur diffusivité thermique, ce qui implique de connaître également leur masse volumique et leur chaleur spécifique. La mesure de la conductivité thermique peut s'effectuer par la méthode du fil chaud ou du hot disk, tandis que la mesure de la diffusivité thermique peut s'effectuer par la méthode (Laser) Flash.

De préférence, le matériau de la matrice et le matériau des parois pleines 6a sont choisis de sorte que leurs coefficients de dilatation thermique soient suffisamment proches pour limiter les dilatations différentielles entre la matrice et les parois.

Par exemple l'aluminium, l'acier et la fonte peuvent être utilisées pour former la matrice et/ou les parois pleines. Les valeurs de coefficients de dilatation linéaires en fonction de la température de matériaux sont données ci-dessous :

Aluminium : $23 \times 10^{-6}$ K$^{-1}$
Acier : $12 \times 10^{-6}$ K$^{-1}$
Fonte : $10,5 \times 10^{-6}$ K$^{-1}$

Les deux autres parois extérieures du module sont des parois extérieures poreuses 6b. Il s'agit de deux parois adjacentes 6b, orthogonales entre elles, et s'étendant chacune parallèlement à la direction des tubes 4. Ces parois extérieures poreuses 6b correspondent aux faces non revêtues de la matrice poreuse.

Lorsque les deux modules adjacents M1 sont assemblés pour former l'ensemble modulaire E de la figure 1, l'une des deux parois extérieures poreuses 6b de l'un des deux modules fait face, voire contacte, l'une des deux parois extérieures poreuses 6b de l'autre des deux modules. En outre, les deux parois extérieures poreuses 6b restantes se retrouvent adjacentes, et coplanaires de manière à former l'unique paroi extérieure poreuse 5b de l'ensemble E, destinée à être recouverte par le couvercle 2b.

Egalement, trois parois extérieures pleines 6a de chacun des deux modules M1 se retrouvent adjacentes et coplanaires deux à deux, de manière à former respectivement trois parois extérieures pleines opposées 5a de l'ensemble E. La paroi extérieure pleine restante 6a de chaque module M1 forme chacune l'intégralité de l'une des parois extérieures pleines 5a de l'ensemble E. Ces parois 5a, obtenues à l'aide de huit parois extérieures pleines 6a des modules, forment ensemble le corps de cuve 2a.

Bien entendu, la conception des deux modules M1 peut être adaptée de sorte qu'après leur assemblage, aucune paroi extérieure poreuse ne subsiste, les parois pleines 6a formant alors l'intégralité de la cuve 2, comme dans le second mode de réalisation préféré qui sera décrit ultérieurement.

Pour la fixation des deux modules M1, la fixation deux à deux des parois extérieures pleines coplanaires 6a s'effectue de préférence par raboutage de leurs deux chants en regard, et plus préférentiellement par soudage de ces deux chants en regard formant respectivement l'extrémité de chacune des deux parois 6a.

De manière particulièrement avantageuse, deux parois extérieures pleines opposées 6a de chaque module sont chacune traversées par les quatre tubes 4. Plus précisément, la première extrémité 4.1 de chaque tube 4 traverse l'une de ces deux parois opposées 6a, tandis que la deuxième extrémité 4.2 traverse l'autre de ces deux parois pleines opposées 6a. Par conséquent, à l'état assemblé des deux modules M1, ces extrémités de tube 4.1, 4.2 pénètrent dans la cuve et débouchent de celle-ci, en traversant deux parois pleines opposées 5a du corps de cuve 2a.

Selon une autre possibilité non représentée, les extrémités 4.1, 4.2 de tous les tubes 4 pourraient traverser une même et unique paroi extérieure pleine 5a du corps de cuve 2a de l'ensemble modulaire E.

Dans le cas où les extrémités des tubes traversent des parois distinctes, par exemple des parois opposées comme indiqué précédemment, les deux parois extérieures traversées 6a de ces modules M1 sont donc préférentiellement des parois pleines de ces modules.

Les modules ainsi réalisés sont sensiblement plus simples à fabriquer que les systèmes existants, car ils ne requièrent pas de rapporter une ou des plaques à fixer aux tubes, par exemple par soudage ou dudgeonnage.

Sur l'ensemble de la figure 1, l'ensemble modulaire E comporte bien cinq parois extérieures pleines 5a, réalisées d'un seul tenant avec leur matrice poreuse MA associée. Ces parois 5a constituent le corps de cuve 2a en forme de bac, et deux de ces parois 5a sont traversées par les tubes 4 au niveau de leurs extrémités 4.1, 4.2. L'unique paroi extérieure poreuse 5b est donc laissée libre pour d'une part permettre le remplissage des matrices avec le matériau MCP, et d'autre part permettre la libre dilatation du matériau MCP lors de son changement d'état. Les pores ouverts de la matrice sont débouchants, ce qui permet au matériau MCP de pénétrer dans les matrices à partir de cette paroi poreuse 5b. Un ciel de gaz peut être ménagé au niveau de la paroi 5b, par exemple un ciel de gaz inerte dans le cas où le matériau MCP est sensible à l'oxydation dans les conditions d'exploitation du système de stockage.

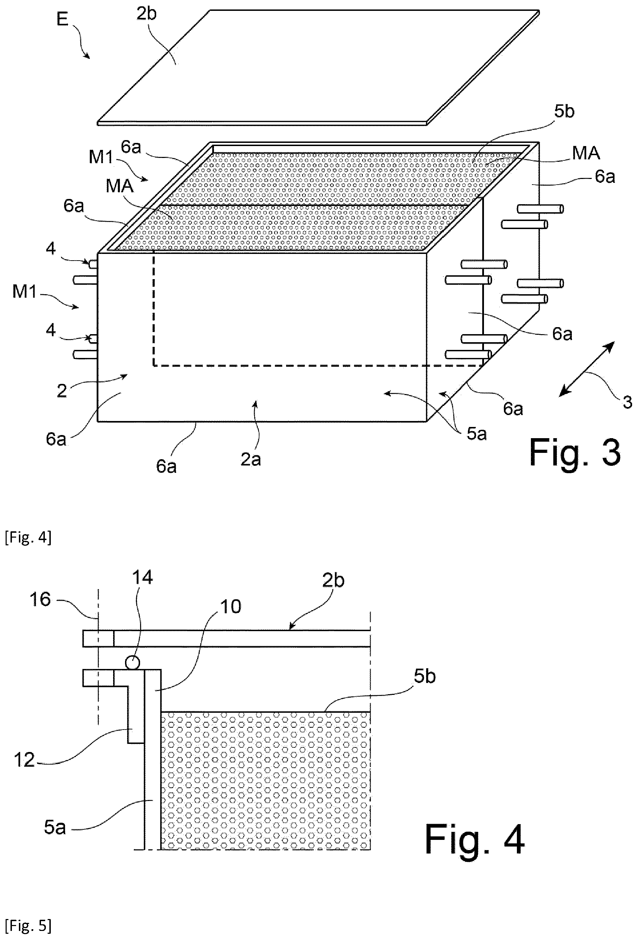

Sur la figure 3, il est représenté un autre ensemble modulaire E très similaire au précédent, dans lequel les quatre parois extérieures pleines 5a qui entourent la paroi extérieure poreuse 5b, s'étendent au-delà de cette dernière de manière à former un rebord 10 continu et bordant la paroi 5b. Ce rebord 10 peut avantageusement délimiter un réservoir pour le matériau MCP.

Ainsi, lorsque le matériau MCP se dilate lors de sa fusion, le matériau MCP sort alors par la paroi extérieure poreuse 5b formée par les deux matrice MA, et ce réservoir permet donc de contenir le matériau MCP lorsqu'il passe à l'état liquide.

En outre ce rebord 10 permet avantageusement la fixation du couvercle 2b de la cuve, pour fermer le volume de manière étanche ou non, délimitant un ciel de gaz inerte ou non, et facilitant la manipulation du module de stockage thermique.

A cet égard, il est noté que le couvercle 2b de l'ensemble E peut être soudé sur le rebord 10 défini par les quatre parois extérieures pleines 5a précitées. Selon une alternative montrée sur la figure 4, l'assemblage du couvercle est réversible, de préférence par bridage mécanique. Pour ce faire, un cadre 12 de section en forme de L est fixé par soudage sur le rebord 10, et des éléments de fixation réversibles 16 (représentés par les traits d'axe), comme des boulons, traversent le cadre 12 et le couvercle 2b de manière à préférentiellement écraser un joint 14 entre eux deux.

Grâce au montage réversible du couvercle 2b, les opérations de contrôle et d'inspections sont facilitées. Bien évidemment, cette solution est également applicable en l'absence de rebord, lorsque la paroi extérieure poreuse 5b affleure les extrémités des quatre parois extérieures pleines 5a qui l'entourent, comme sur l'ensemble E de la figure 1. Pour permettre un tel assemblage réversible du couvercle, il peut être judicieux d'ajouter des plots de fixation sur les côtés de chaque paroi coulée monobloc lors de la fabrication, de manière à ce que ces plots puissent servir d'appui pour fixer le couvercle à un système de fixation amovible et étanche.

Dans le cas d'une fixation irréversible du couvercle, par exemple par soudage, des points de piquage peuvent être réalisées sur la cuve, par exemple au point haut et au point bas de celle-ci, de manière à permettre le remplissage / la vidange du matériau MCP.

Une autre possibilité réside dans la réalisation d'un plan incliné avec piquage en point bas, afin de permettre à tout le matériau MCP de s'écouler, et d'éviter ainsi une stagnation. Cette solution peut d'ailleurs être envisagée que le couvercle soit monté réversible ou irréversible.

Dans les modules M1 décrits ci-dessus et formant l'ensemble E, les tubes 4 sont rectilignes et parallèles, et le fluide caloporteur ne circule que selon un sens de direction, lors d'une phase de charge ou de décharge.

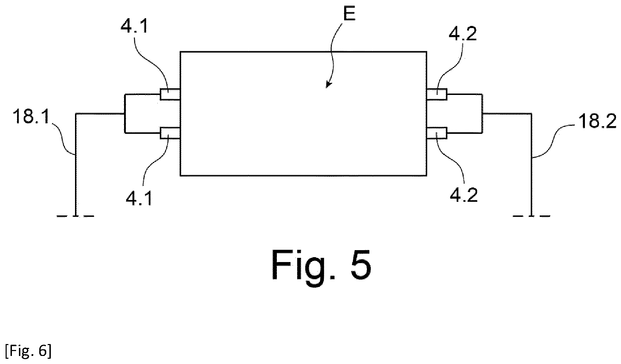

De manière avantageuse, les tubes sont tels que le module a une configuration hydraulique en multi-passes, i.e. le fluide caloporteur dans chaque tube circule successivement lors de son écoulement dans la matrice poreuse dans des sens différents, par exemple opposés entre les deux extrémités du tube pendant une phase de charge et de décharge. Alternativement, les tubes 4 pourraient prendre une forme de serpentin et/ou de spires. Quelle que soit la forme retenue pour les tubes, ceux-ci sont préférentiellement connectés en parallèle par des nourrices hydrauliques d'alimentation/de collecte, selon qu'il s'agisse d'une phase de charge et une phase de décharge. Par exemple, au sein du système de stockage, les premières extrémités 4.1 des tubes 4 sont connectées à une nourrice hydraulique 18.1, tandis que les deuxièmes extrémités 4.2 des tubes 4 sont connectées à une autre nourrice hydraulique 18.2, comme cela a été schématisé sur la figure 5.

La configuration multi-passes qui est proposée permet d'augmenter la vitesse du fluide caloporteur, donc le coefficient d'échange thermique convectif du fluide caloporteur, et donc le coefficient d'échange global entre le fluide caloporteur et le matériau MCP.

De préférence, le sens de circulation du fluide caloporteur lors des phases de charge et de décharge est tel que le matériau MCP peut changer de volume lors des changements de phase en appliquant des contraintes réduites, voire sans appliquer de contraintes à la structure.

Dans le cas d'un matériau MCP dont le volume augmente lors du passage à l'état liquide, de préférence l'alimentation en caloporteur chaud s'effectue par la partie supérieure du module. Ainsi, le matériau MCP situé dans la partie supérieure du module peut se dilater vers la surface libre. L'alimentation en fluide froid s'effectue alors de préférence par le bas du module.

Dans les exemples décrits, le fluide circulant dans les tubes 4 est issu de la même source chaude ou source froide, c'est donc le même fluide qui circule dans tous les tubes en parallèle ou en série.

Dans un autre exemple de réalisation, l'ensemble de stockage E comporte plusieurs circuits séparés de circulation de fluide caloporteur, par exemple pour faire circuler des fluides caloporteurs différents. En effet certaines applications requièrent de disposer d'au moins deux échangeurs thermiques internes distincts, alimentés chacun par un fluide caloporteur différent. Par exemple, un premier fluide caloporteur est utilisé pour apporter de la chaleur au stockage thermique entraînant la fusion du matériau MCP, tandis que le second fluide caloporteur est utilisé pour décharger le stockage thermique en récupérant la chaleur générée par la solidification du matériau MCP. Cette configuration est par exemple rencontrée lorsque le système de stockage thermique est à l'interface entre une source qui produit de la chaleur, par exemple une pompe à chaleur, et un système qui convertit la chaleur en électricité au moment où c'est le plus opportun, par exemple une machine à cycle organique de Rankine. D'autres exemples sont possibles, comme des panneaux photovoltaïques, ou tout système de récupération de chaleur fatale.

Les fluides caloporteurs rencontrés dans ce type de configuration sont souvent des fluides frigorifiques diphasiques. Un tel moyen de stockage thermique, pourvu de deux échangeurs thermiques internes distincts, est également particulièrement intéressant sur des réseaux de chaleur où il est avantageusement positionné à l'interface entre le circuit primaire plus haut en température et le circuit secondaire plus bas en température. D'autres applications sont également réputées intéressantes, comme dans le domaine du tertiaire ou pour des logements isolés.

Suivant ce schéma d'intégration, le moyen de stockage thermique fonctionnerait en parallèle de l'échangeur thermique usuel qui assure le transfert de chaleur entre le circuit primaire et le circuit secondaire. Dans cette conception, le premier échangeur thermique interne du moyen de stockage thermique est alimenté par le fluide caloporteur circulant dans le circuit primaire, tandis que le deuxième échangeur thermique interne du moyen de stockage thermique est alimenté par le fluide caloporteur circulant dans le circuit secondaire. Ainsi en considérant que le circuit primaire est plus élevé en température que le circuit secondaire, un tel moyen de stockage thermique à l'interface entre les deux circuits, est alimenté par le circuit primaire pour sa charge, i.e. entraînant la fusion du matériau MCP et donc la récupération et le stockage de la chaleur, puis serait alimenté par le circuit secondaire pour sa décharge, i.e. entraînant la cristallisation du matériau MCP et donc la restitution de la chaleur stockée. Le matériau MCP est choisi en fonction de sa température de changement d'état liquide/solide de sorte à ce que la température d'alimentation du circuit primaire soit suffisante pour entraîner la fusion du matériau MCP et la température d'alimentation du circuit secondaire soit suffisante pour entraîner la cristallisation du matériau MCP.

Dans un exemple, les échangeurs thermiques sont réalisés au moyen de deux tubes coaxiaux, le premier fluide caloporteur circule dans le tube interne tandis que le deuxième fluide caloporteur circule dans le canal annulaire formé entre le tube interne et le tube externe, le premier fluide échange alors de la chaleur avec le matériau MCP à travers les deux tubes et le premier fluide caloporteur. Dans un autre exemple, les deux échangeurs thermiques sont distincts et de structures ou non différentes. Ainsi il est possible de choisir la structure de chaque échangeur thermique qui soit la plus efficace en matière de transfert thermique pour le fluide caloporteur circulant dans chaque échangeur thermique.

Comme cela a été déjà mentionné ci-dessus, l'invention mettant en oeuvre une matrice poreuse moulée autour d'un ou de plusieurs échangeurs thermiques offre une grande liberté en matière de forme et de géométrie finale pour les modules de stockage thermique M1, et donc également pour les ensembles modulaires E qui en découlent.

La forme parallélépipédique permet de faciliter leur intégration et de maximiser leur volume utile par rapport à la surface qu'ils occupent au sol, ce qui réduit l'espace occupé au sol par le système de stockage thermique qui en résulte. Au contraire, les systèmes de stockage de l'état de la technique comportent généralement des calandres cylindriques pour contenir le matériau MCP, présentant une emprise au sol importante par rapport à leur volume.

Par ailleurs, cette forme générale parallélépipédique des modules M1 permet d'associer plusieurs modules en les juxtaposant et/ou les empilant aisément, de façon à s'adapter au mieux à l'espace au sol disponible, et en les connectant fluidiquement en parallèle ou en série.

Si le premier mode de réalisation de la figure 1 comporte deux modules M1 juxtaposés selon la direction d'empilement 3, par exemple d'orientation horizontale, de multiples autres solutions demeurent possibles pour l'obtention de l'ensemble E, par exemple à l'aide du même module M1.

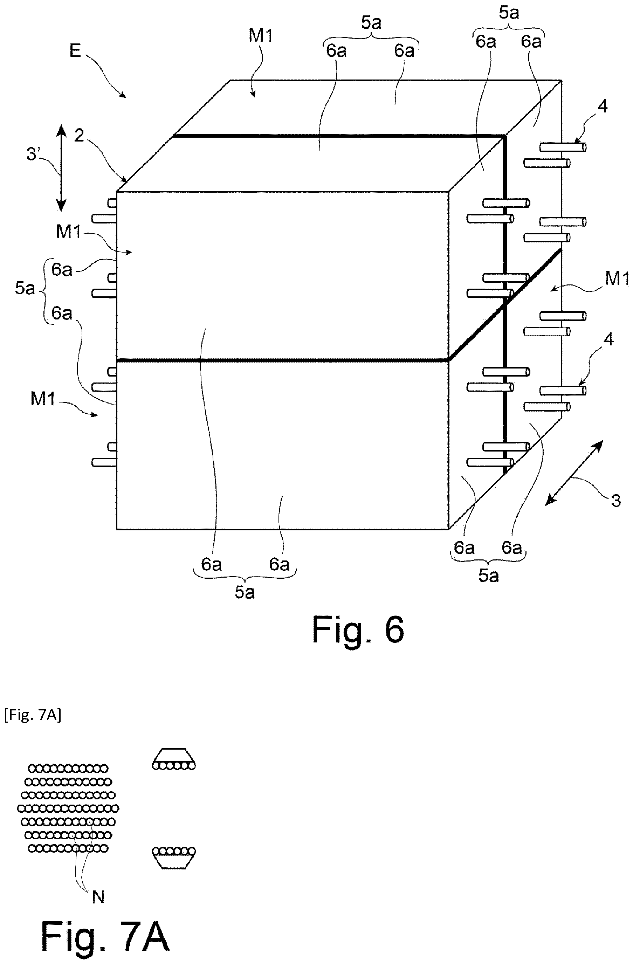

Un second mode de réalisation préféré de cet ensemble E est représenté sur la figure 6. Dans ce second mode, ce sont quatre modules M1 qui sont assemblés les uns aux autres, deux d'entre eux étant juxtaposés selon la direction 3, et deux autres modules M1, également juxtaposés l'un l'autre selon la direction 3, étant empilés sur les deux autres selon une autre direction d'empilement 3', orthogonale à la direction 3. La direction 3' peut correspondre à la direction verticale.

Ainsi, l'ensemble modulaire E comporte seize tubes 4, traversant chacun deux parois extérieures pleines opposées 5a de l'ensemble E. Chacune de ces deux parois traversées 5a est réalisée par quatre parois extérieures pleines 6a coplanaires et appartenant respectivement aux quatre modules M1. Les quatre parois extérieures pleines restantes 5a, qui forment l'intégralité de la cuve 2 avec les deux parois opposées 5a précitées, sont chacune réalisée par deux parois extérieures pleines 6a adjacentes et coplanaires et appartenant respectivement à deux des quatre modules M1. Par conséquent, ce sont seize parois extérieures pleines 6a de module qui forment l'intégralité de la cuve 2.

Bien entendu, la conception des quatre modules M1 peut être adaptée de sorte qu'après leur assemblage, une paroi extérieure poreuse subsiste, destinée à être recouverte par un couvercle, comme dans le premier mode de réalisation préféré décrit ci-dessus.

Quel que soit le mode envisagé, il est possible d'isoler hydrauliquement un ou plusieurs modules M1 de l'ensemble E, par exemple au moyen de vannes, pour que ceux-ci ne stockent pas de la chaleur ou n'en délivre pas en fonction de la quantité de chaleur à stocker ou à récupérer respectivement, par exemple en fonction des saisons. Un tel système de stockage offre une grande souplesse de fonctionnement.

A tire d'exemple, chaque module M1 peut présenter les dimensions suivantes : 1 m $\times$ 0,25 m $\times$ 0,5 m et un volume externe (hors raccordements hydrauliques et hors cuve) d'environ 0,0625 m$^3$.

De telles dimensions permettent un empilement aisé des modules, selon une ou plusieurs directions. La matrice poreuse MA peut présenter une porosité comprise entre 75% et 95% occupée quasi complètement par le matériau MCP. Chaque module peut stocker une énergie thermique comprise entre 4 et 20 kWatt.heure.

A titre d'exemple, en considérant une sous-station d'un réseau de chaleur disposant contre une paroi d'un volume libre pour du stockage de chaleur de 0,5 m $\times$ 1 m au sol sur une hauteur de 3 m, il serait possible d'installer un système de stockage thermique composé d'un empilement de vingt-quatre modules unitaires présentant un volume total de 1,5 m$^3$. Un même système composé de deux cuves cylindriques de conception traditionnelle ne présenterait qu'un volume total de 1,17 m$^3$, soit au minimum 20% de de capacité de stockage d'énergie thermique en moins.

L'invention permet de libérer de l'espace pour stocker du matériau MCP.

Le procédé mis en oeuvre pour fabriquer l'ensemble de stockage selon invention permet un surmoulage de la mousse directement sur les tubes, ce qui n'était pas possible avec tout autre type de mousse stochastique.

Le surmoulage de la mousse en aluminium sur les tubes en acier assure une mise sous contrainte de l'interface acier/aluminium garantissant une liaison métal/métal intime et durable.

L'intégration des échangeurs thermiques dans la mousse permet un meilleur transfert thermique entre le caloporteur et le matériau MCP, ce qui permet de réduire le nombre d'échangeurs thermiques, par exemple le nombre de tubes. Le fait d'utiliser moins de tubes offre la possibilité d'utiliser des nourrices hydrauliques pour la distribution hydraulique et la collecte hydraulique du fluide caloporteur aux extrémités de connexion des échangeurs thermiques. L'utilisation de nourrices hydrauliques, de préférence équipées d'organes d'équilibrage, offre plusieurs avantages. Tout d'abord, elle permet de s'affranchir de l'utilisation de boîtes à eau impliquant le recours à des plaques pour réaliser l'interface avec le faisceau de tubes souvent utilisées dans la conception traditionnelle. L'utilisation de plaques, également appelées plaques collectrices de tubes, implique de nombreuses et coûteuses opérations d'assemblage (obtenues par soudage ou par dudgeonnage) pour réaliser la liaison entre la/les plaque(s)) et les tubes. Il faut ainsi compter deux opérations d'assemblage par tube. Ces opérations d'assemblage peuvent en outre constituer des zones fragilisées dès l'instant où elles font intervenir des opérations de soudage.

L'utilisation de nourrices hydrauliques simplifie également les opérations d'assemblage. Les soudures sont réalisées à l'extérieur du module de stockage thermique ente les extrémités de connexion des échangeurs thermiques et les nourrices.

La liaison par soudure se fait avantageusement « *bout-à-bout* » ou par l'utilisation de raccords, par exemple de type union, offrant une bien meilleure résistance mécanique que des liaisons tubes sur plaques tubulaires usuelles. D'autre part, la possibilité de réaliser les liaisons soudées à l'extérieur du module facilite leur accessibilité, notamment pour les opérations de contrôles périodiques / inspection. En outre, le fait d'éviter l'usage de boîtes à eau pour la distribution et la collecte hydraulique du fluide caloporteur du moule en utilisant à la place des nourrices hydrauliques permet de réduire le volume de fluide caloporteur contenu dans ces composants. Dans l'éventualité où le fluide caloporteur est pressurisé, la possibilité de réduire le volume contenu dans le module permet d'alléger et de limiter les contraintes sur la conception, notamment dans le cas d'utilisation de fluide sous pression.

La réduction du nombre de tubes permet de ne pas avoir recours à des inserts, réduisant le coût et la complexité du module. La densité énergétique de stockage du module peut être augmentée dans la mesure où du volume libéré par les tubes en moins peut être remplacé par du matériau MCP. L'absence d'inserts dans les tubes peut réduire les risques d'encrassement dans les tubes dans certains cas.

Un exemple de procédé de fabrication du module de stockage thermique M1 va maintenant être décrit.

Les figures 7A à 7F représentent différentes étapes de manière schématique d'un exemple procédé de fabrication du module de stockage thermique M1.

Tout d'abord on fournit des noyaux qui sont fabriqués par agrégation d'éléments au moyen d'un liant, par exemple un polyuréthane. Les éléments sont placés dans un moule de forme correspondante à celle de la préforme PR que l'on souhaite réaliser afin d'obtenir les noyaux N. Pour garantir un bon empilement des noyaux dans un moule, on dépose les éléments couche par couche et le nombre de couches dépend de la forme et de la taille de la préforme PR.

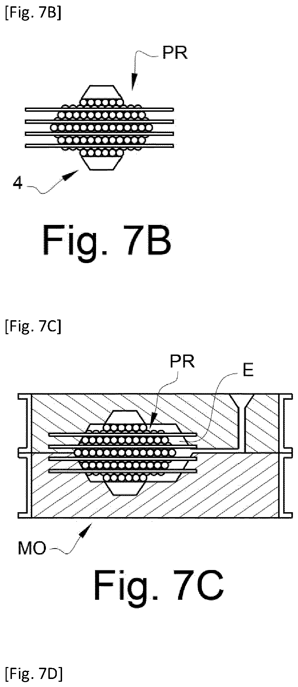

Les tubes en acier sont placés dans les couches de noyaux N, un espace prévu à cet effet est intégré, par exemple par CAO. Autour de chaque tube et entre les noyaux une couche d'aluminium vient enrober le tube d'acier pour maximiser le surmoulage et la liaison thermique (Figure 7B).

La préforme PR est disposée dans un moule MO (figure 7C). Le moule est par exemple en sable ou en un matériau métallique. Le moule et la disposition de la préforme dans le moule sont tels qu'un espace vide E' entre la préforme et une paroi interne du moule MO est formé de sorte que, lors du moulage, une paroi extérieure pleine dans le matériau de la matrice sera formée sur une face de la matrice poreuse et autour des extrémités des tubes. Lors d'une étape suivante représentée sur la figure 7D, un bain de métal B, par exemple de l'aluminium est préparé puis le métal liquide est infiltré dans la préforme. Le système de remplissage et la température du métal sont adaptés à la configuration de la matrice à fabriquer. Un logiciel permettant de calculer les distances d'infiltration de métal peut être utilisé. Le métal est solidifié (Figure 7E), à ce stade, la préforme est toujours contenue dans la pièce et doit donc être détruite. Pour ce faire, on plonge la pièce dans un solvant, de sorte que la préforme se dissolve. La pièce obtenue après destruction de la préforme présentes deux types de zones : des zones en mousse creuse, à la place de la préforme, et des zones pleines en alliage à la place de l'espace vide. La pièce peut présenter ainsi une « peau » autour de la zone en mousse (figure 7F).

Le métal est parachevé et le module est terminé notamment en rapportant les autres parties de la cuve, par exemple par soudage.

Le module peut être ensuite rempli de matériau MCP. Ce remplissage du module en MCP peut avoir lieu lorsque le module est en place et connecté au réseau de fluide caloporteur pour assurer l'apport de chaleur nécessaire à la fusion du MCP. Lors du remplissage le MCP peut être apporté sous forme de poudre, sous forme de granules de quelques millimètres de diamètre (généralement entre 1 mm et 3 mm) ou bien directement sous forme liquide, i.e. après avoir été préalablement chauffé pour d'être fondu).

Le procédé de fabrication de la matrice peut comporter un contrôle de la forme des noyaux, un contrôle de la porosité du métal avant coulée, une mesure de la température du métal avant coulée, une vérification de la métallurgie du métal avant coulée.

Bien entendu, diverses modifications peuvent être apportées par l'homme du métier à l'invention qui vient d'être décrite, uniquement à titre d'exemples non limitatifs, et dont la portée est définie par les revendications annexées. En particulier, les différents modes de réalisation qui ont été décrits sont combinables, et leurs caractéristiques interchangeables.

## Revendications

1. Ensemble modulaire (E) de stockage thermique par matériau à changement de phase comportant plusieurs modules de stockage thermique (M1) fixés les uns aux autres, l'ensemble de stockage thermique comprenant une cuve (2),

   chaque module de stockage thermique (M1) par matériau à changement de phase étant délimité par une pluralité de parois extérieures (5a, 5b), et comprenant :

   - au moins un échangeur thermique (4) comportant des première (4.1) et deuxième (4.2) extrémités de connexion destinées à être connectées à un réseau de fluide caloporteur, lesdites première (4.1) et deuxième (4.2) extrémités de connexion pénétrant et débouchant de la cuve (2),
   - une structure (S) destinée à contenir un matériau à changement de phase, ladite structure (S) comprenant une matrice poreuse (MA, MA') à cellules communicantes traversée par ledit échangeur thermique (4) et en contact avec la surface extérieure dudit échangeur thermique (4), ladite matrice (MA, MA') étant obtenue par moulage autour dudit échangeur thermique (4),

   au moins l'une des parois extérieures du module, appelée paroi extérieure pleine (6a), étant formée par moulage directement sur la matrice poreuse (MA, MA') de manière à former une partie de ladite cuve (2) de l'ensemble de stockage thermique,
   au moins l'une des autres parois extérieures du module, appelée paroi extérieure poreuse (6b), étant formée par la matrice poreuse (MA, MA'),
   et parmi les modules (M1) de l'ensemble de stockage thermique, au moins deux modules adjacents sont disposés de sorte qu'une paroi extérieure poreuse (6b) de l'un des modules (M1) soit agencée face à une paroi extérieure poreuse (6b) de l'autre des modules (M1), et de sorte qu'une paroi extérieure pleine (6a) de l'un des modules (M1) soit fixée à une paroi extérieure pleine (6a) de l'autre des modules (M1).

2. Ensemble modulaire selon la revendication 1, dans lequel lesdites première (4.1) et deuxième (4.2) extrémités de connexion dudit échangeur thermique (4) traversent au moins une paroi extérieure pleine (6a) de chaque module de stockage thermique (M1).

3. Ensemble modulaire selon la revendication 1 ou 2, dans lequel la cuve (2) est intégralement réalisée par des parois extérieures pleines (6a) des modules (M1).

4. Ensemble modulaire selon la revendication 1 ou 2, dans lequel la cuve (2) est réalisée par des parois extérieures pleines (6a) des modules (M1) pour former un corps de cuve (2a), fermé par un couvercle (2b) rapporté sur ces parois extérieures pleines (6a).

5. Ensemble modulaire selon la revendication 4, dans lequel le couvercle (2b) est rapporté par bridage mécanique sur le corps de cuve (2a).

6. Ensemble modulaire selon l'une quelconque des revendications précédentes, dans lequel deux parois extérieures pleines (6a) de deux modules adjacents (M1) sont fixées l'une à l'autre par raboutage de leurs chants en regard, de préférence par soudage.

7. Ensemble modulaire selon l'une quelconque des revendications précédentes, dans lequel au moins l'une des parois extérieures pleines (6a) des modules (M1) est formée directement lors du moulage de la matrice (MA, MA') et d'un seul tenant avec cette matrice.

8. Ensemble modulaire selon l'une quelconque des revendications précédentes, dans lequel au moins l'une des parois extérieures pleines (6a) des modules est formée sur la matrice (MA, MA') après le moulage de celle-ci.

9. Ensemble modulaire selon la revendication 8, dans lequel au moins l'une des parois extérieures pleines (6a) des modules est en un matériau présentant une conductivité thermique inférieure à celle de la matrice (MA, MA') de son module associé.

10. Ensemble modulaire selon l'une quelconque des revendications précédentes, dans lequel la matrice poreuse (MA, MA') est en matériau métallique, par exemple en aluminium ou alliage d'aluminium.

11. Ensemble modulaire selon l'une quelconque des revendications précédentes, dans lequel ledit échangeur thermique (4) est un tube.

12. Ensemble modulaire selon l'une quelconque des revendications précédentes, dans lequel au moins l'un des modules (M1) est équipé de plusieurs échangeurs thermiques (4), de préférence configurés pour être connectés en parallèle à un réseau de fluide caloporteur et dans lequel les premières extrémités de connexion (4.1) sont destinées à être connectées à une nourrice hydraulique (18.1) et les deuxièmes extrémités de connexion (4.2) sont destinées à être connectées à une deuxième nourrice hydraulique (18.2).

13. Ensemble modulaire selon l'une quelconque des revendications précédentes, dans lequel chaque module (M1) présente une forme générale parallélépipédique, et dans lequel ils sont assemblés de manière à ce que l'ensemble de stockage (E) présente également une forme générale parallélépipédique.

14. Ensemble modulaire selon la revendication 13, formé par deux modules (M1) au sein de chacun desquels quatre de ses six parois extérieures sont des parois extérieures pleines (6a), et les deux autres des parois extérieures poreuses (6b), les deux modules (M1) étant assemblés l'un à l'autre de sorte que les huit parois extérieures pleines (6a) forment un corps de cuve (2a), fermé par un couvercle (2b) rapporté sur ces parois extérieures pleines (6a).

15. Ensemble modulaire selon la revendication 13, formé par quatre modules (M1) au sein de chacun desquels quatre de ses six parois extérieures sont des parois extérieures pleines (6a), et les deux autres des parois extérieures poreuses (6b), les quatre modules (M1) étant assemblés les uns aux autres de sorte que les seize parois extérieures pleines (6a) forment l'intégralité de la cuve (2).

16. Système de stockage thermique comportant au moins un ensemble modulaire (E) selon l'une quelconque des revendications précédentes, et du matériau à changement de phase remplissant les cellules des matrices (MA, MA') des modules (M1).

17. Procédé de fabrication d'un ensemble modulaire de stockage thermique (E) selon l'une quelconque des revendications 1 à 15, comportant la fabrication des modules (M1), puis leur fixation les uns aux autres par fixation de leurs parois extérieures pleines (6a) entre elles.

18. Procédé de fabrication selon la revendication 17, dans lequel la fabrication de chaque module (M1) comprend :

- la fourniture d'une préforme comprenant des plaques de noyaux et au moins un échangeur thermique entre les noyaux,
- la mise en place de la préforme dans un moule,
- l'introduction d'un métal liquide dans la préforme,
- la solidification du métal,
- le retrait des noyaux.

**Patentansprüche**

1. Modulare Anordnung (E) zur Wärmespeicherung durch Phasenwechselmaterial, die mehrere aneinander befestigte Wärmespeichermodule (M1) umfasst, wobei die Wärmespeicheranordnung einen Behälter (2) umfasst,

wobei jedes Wärmespeichermodul (M1) durch Phasenwechselmaterial durch eine Vielzahl von Außenwänden (5a, 5b) begrenzt wird und Folgendes umfasst:

- mindestens einen Wärmetauscher (4), der ein erstes (4.1) und ein zweites (4.2) Anschlussende umfasst, die dazu bestimmt sind, an ein Wärmeübertragungsflüssigkeitsnetz angeschlossen zu werden, wobei das erste (4.1) und das zweite (4.2) Anschlussende in den Behälter (2) eintreten und austreten,
- eine Struktur (S), die dazu bestimmt ist, ein Phasenwechselmaterial zu enthalten, wobei die Struktur (S) eine poröse Matrix (MA, MA') mit zusammenhängenden Zellen umfasst, durch die der Wärmetauscher (4) verläuft und die mit der Außenfläche des Wärmetauschers (4) in Kontakt stehen, wobei die Matrix (MA, MA') durch Formen des Wärmetauschers (4) erhalten wird,

wobei mindestens eine der Außenwände des Moduls, die als massive Außenwand (6a) bezeichnet wird, durch direktes Formen auf der porösen Matrix (MA, MA') gebildet wird, um so einen Teil des Behälters (2) der Wärmespeicheranordnung zu bilden,

wobei mindestens eine der weiteren Außenwände des Moduls, die als poröse Außenwand (6b) bezeichnet wird, durch die poröse Matrix (MA, MA') gebildet wird,

und unter den Modulen (M1) der Wärmespeicheranordnung mindestens zwei benachbarte Module derart angeordnet sind, dass eine poröse Außenwand (6b) eines der Module (M1) gegenüber einer porösen Außenwand (6b) des anderen der Module (M1) ausgebildet ist und dass eine massive Außenwand (6a) eines der Module (M1) an einer massiven Außenwand (6a) des anderen der Module (M1) befestigt ist.

2. Modulare Anordnung nach Anspruch 1, wobei das erste (4.1) und das zweite (4.2) Anschlussende des Wärmetauschers (4) durch mindestens eine massive Außenwand (6a) jedes Wärmespeichermoduls (M1) verlaufen.

3. Modulare Anordnung nach Anspruch 1 oder 2, wobei der Behälter (2) vollständig durch die massiven Außenwände (6a) der Module (M1) hergestellt ist.

4. Modulare Anordnung nach Anspruch 1 oder 2, wobei der Behälter (2) durch die massiven Außenwände (6a) der Module (M1) hergestellt ist, um einen Behälterkörper (2a) zu bilden, der durch einen Deckel (2b) verschlossen wird, der an den massiven Außenwänden (6a) angebracht ist.

5. Modulare Anordnung nach Anspruch 4, wobei der Deckel (2b) durch mechanisches Bördeln an den Behälterkörper (2a) angebracht ist.

6. Modulare Anordnung nach einem der vorhergehenden Ansprüche, wobei zwei massive Außenwände (6a) zweier benachbarter Module (M1) durch Aneinanderfügen, vorzugsweise durch Schweißen, ihrer gegenüberliegenden Kanten aneinander befestigt sind.

7. Modulare Anordnung nach einem der vorhergehenden Ansprüche, wobei mindestens eine der massiven Außenwände (6a) der Module (M1) direkt beim Formen der Matrix (MA, MA') und einstückig mit dieser Matrix gebildet wird.

8. Modulare Anordnung nach einem der vorhergehenden Ansprüche, wobei mindestens eine der massiven Außenwände (6a) der Module nach deren Formung auf der Matrix (MA, MA') gebildet wird.

9. Modulare Anordnung nach Anspruch 8, wobei mindestens eine der massiven Außenwände (6a) der Module aus einem Material besteht, dessen Wärmeleitfähigkeit geringer ist als die der Matrix (MA, MA') des zugehörigen Moduls.

10. Modulare Anordnung nach einem der vorhergehenden Ansprüche, wobei die poröse Matrix (MA, MA') aus einem Metallmaterial, beispielsweise Aluminium oder einer Aluminiumlegierung, besteht.

11. Modular Anordnung nach einem der vorhergehenden Ansprüche, wobei der Wärmetauscher (4) ein Rohr ist.

12. Modulare Anordnung nach einem der vorhergehenden Ansprüche, wobei mindestens eines der Module (M1) mit mehreren Wärmetauschern (4) ausgestattet ist, die vorzugsweise dazu konfiguriert sind, parallel an ein Wärmeträgerflüssigkeitsnetz angeschlossen zu werden, und wobei die ersten Anschlussenden (4.1) dazu bestimmt sind, an einen hydraulischen Verteiler (18.1) angeschlossen zu werden, und die zweiten Anschlussenden (4.2) dazu bestimmt sind, an einen zweiten hydraulischen Verteiler (18.2) angeschlossen zu werden.

13. Modulare Anordnung nach einem der vorhergehenden Ansprüche, wobei jedes Modul (M1) eine allgemeine parallelepipedische Form aufweist, und wobei sie derart zusammengefügt sind, dass die Speicheranordnung (E) ebenfalls eine allgemeine parallelepipedische Form aufweist.

**14.** Modulare Anordnung nach Anspruch 13, die durch zwei Module (M1) gebildet wird, innerhalb derer jeweils vier der sechs Außenwände die massiven Außenwände (6a) und die anderen beiden die porösen Außenwände (6b) sind, wobei die beiden Module (M1) derart zusammengefügt sind, dass die acht massiven Außenwände (6a) einen Behälterkörper (2a) bilden, der durch einen Deckel (2b) verschlossen wird, der an den massiven Außenwänden (6a) angebracht ist.

**15.** Modulare Anordnung nach Anspruch 13, die durch vier Module (M1) gebildet wird, innerhalb derer jeweils vier seiner sechs Außenwände die massiven Außenwände (6a) und die anderen beiden die porösen Außenwände (6b) sind, wobei die vier Module (M1) derart zusammengefügt sind, dass die sechzehn massiven Außenwände (6a) den gesamten Behälter (2) bilden.

**16.** Wärmespeichersystem, das mindestens eine modulare Anordnung (E) nach einem der vorhergehenden Ansprüche und Phasenwechselmaterial umfasst, das die Zellen der Matrizen (MA, MA') der Module (M1) füllt.

**17.** Verfahren zum Herstellen einer modularen Wärmespeicheranordnung (E) nach einem der Ansprüche 1 bis 15, das das Herstellen der Module (M1) und dann deren Befestigung aneinander durch das Befestigen ihrer massiven Außenwände (6a) aneinander umfasst.

**18.** Herstellungsverfahren nach Anspruch 17, wobei das Herstellen jedes Moduls (M1) Folgendes umfasst:

- Bereitstellen eines Vorformlings, der Kernplatten und mindestens einen Wärmetauscher zwischen den Kernen umfasst,
- Platzieren des Vorformlings in eine Form,
- Einbringen eines flüssigen Metalls in den Vorformling,
- Verfestigen des Metalls,
- Entfernen der Kerne.

**Claims**

**1.** Modular assembly (E) for storing heat by phase-change material including a plurality of heat-storage modules (M1) attached to one another, the heat-storage assembly comprising a vessel (2),

each module (M1) for storing heat by phase-change material being delimited by a plurality of external walls (5a, 5b), and comprising:

- at least one heat exchanger (4) including first (4.1) and second (4.2) connection ends intended to be connected to a heat-transfer fluid system, said first (4.1) and second (4.2) connection ends entering and emerging from the vessel (2),
- a structure (5) intended to contain a phase-change material, said structure (5) comprising a porous matrix (MA, MA') with communicating cells through which said heat exchanger (4) passes and in contact with the external surface of said heat exchanger (4), said matrix (MA, MA') being obtained by moulding around said heat exchanger (4),

at least one of the external walls of the module, referred to as a solid external wall (6a), being formed by moulding directly on the porous material so as to form a part of said vessel (2) of the heat-storage assembly, at least one of the other external walls of the module, referred to as a porous external wall (6b), being formed by the porous matrix (MA, MA'), and, among the modules (M1) of the heat-storage assembly, at least two adjacent modules are disposed so that a porous external wall (6b) of one of the modules (M1) is arranged facing a porous external wall (6b) of the other one of the modules (M1), and so that a solid external wall (6a) of one of the modules (M1) is attached to a solid external wall (6a) of the other one of the modules (M1).

**2.** Modular assembly according to claim 1, wherein said first (4.1) and second (4.2) connection ends of said heat exchanger (4) pass through at least one solid external wall (6a) of each heat-storage module (M1).

**3.** Modular assembly according to claim 1 or 2, wherein the vessel (2) is entirely produced by solid external walls (6a) of the modules (M1).

4. Modular assembly according to claim 1 or 2, wherein the vessel (2) is produced by solid external walls (6a) of the modules (M1) to form a vessel body (2a), closed by a cover (2b) attached to these solid external walls (6a).

5. Modular assembly according to claim 4, wherein the cover (2b) is attached by mechanical flanging on the vessel body (2a).

6. Modular assembly according to any preceding claim, wherein two solid external walls (6a) of two adjacent modules (M1) are attached to each other by butt-jointing their facing edges, preferably by welding.

7. Modular assembly according to any preceding claim, wherein at least one of the solid external walls (6a) of the modules (M1) is formed directly during the moulding of the matrix (MA, MA') and in a single piece with this matrix.

8. Modular assembly according to any preceding claim, wherein at least one of the solid external walls (6a) of the modules is formed on the matrix (MA, MA') after the moulding thereof.

9. Modular assembly according to claim 8, wherein at least one of the solid external walls (6a) of the modules is made from a material having thermal conductivity lower than that of the matrix (MA, MA') of its associated module.

10. Modular assembly according to any preceding claim, wherein the porous matrix (MA, MA') is made from metal material, for example aluminium or aluminium alloy.

11. Modular assembly according to any preceding claim, wherein said heat exchanger (4) is a tube.

12. Modular assembly according to any preceding claim, wherein at least one of the modules (M1) is equipped with a plurality of heat exchangers (4), preferably configured to be connected in parallel to a heat-transfer fluid system and wherein the first connection ends (4.1) are intended to be connected to a hydraulic service tank (18.1) and the second connections ends (4.2) are intended to be connected to a second hydraulic service tank (18.2).

13. Modular assembly according to any preceding claim, wherein each module (M1) has a roughly parallelepipedal shape, and wherein they are assembled so that the storage assembly (E) also has a roughly parallelepipedal shape.

14. Modular assembly according to claim 13, formed by two modules (M1) in each of which four of its six external walls are solid external walls (6a), and the other two porous external walls (6b), the two modules (M1) being assembled with each other so that the eight solid external walls (6a) form a vessel body (2a), closed by a cover (2b) attached to these solid external walls (6a).

15. Modular assembly according to claim 13, formed by four modules (M1) in each of which four of its six external walls are solid external walls (6a), and the other two porous external walls (6b), the four modules (M1) being assembled with each other so that the sixteen solid external walls (6a) form the whole of the vessel (2).

16. Heat-storage system including at least one such modular assembly (E) according to any preceding claim, and phase-change material filling the cells of the matrices (MA, MA') of the modules (M1).

17. Method for manufacturing such a modular heat-storage assembly (E) according to any preceding claim, including the manufacture of the modules (M1), then the attachment thereof to one another by attaching their solid external walls (6a) to one another.

18. Manufacturing method according to claim 17, wherein the manufacture of each module (M1) comprises:

- supplying a preform comprising core plates and at least one heat exchanger between the cores,
- placing the preform in a mould,
- introducing a liquid metal into the preform,
- solidifying the metal,
- removing the cores.

[Fig. 1]

Fig. 1

[Fig. 1A]

Fig. 1A

[Fig. 1B]

Fig. 1B

[Fig. 1C]

Fig. 1C

[Fig. 2]

Fig. 2

[Fig. 3]

Fig. 3

[Fig. 4]

Fig. 4

[Fig. 5]

Fig. 5

[Fig. 6]

Fig. 6

[Fig. 7A]

Fig. 7A

[Fig. 7B]

Fig. 7B

[Fig. 7C]

Fig. 7C

[Fig. 7D]

Fig. 7D

[Fig. 7E]

Fig. 7E

[Fig. 7F]

Fig. 7F

**RÉFÉRENCES CITÉES DANS LA DESCRIPTION**

**Documents brevets cités dans la description**

- EP 2904343 A